# FASCICULE DE BREVET EUROPEEN

(11) **EP 1 550 844 B1**
(45) Date de publication et mention de la délivrance du brevet: **29.02.2012**
(21) Numéro de dépôt: 04300958.8
(22) Date de dépôt: 31.12.2004
(51) Int. Cl.: G01D 5/12, G01F 15/06

(54) **Dispositif de détection de rotation d'un élément tournant tel que la turbine d'un compteur d'eau**
Einrichtung zur Detektion des Drehens eines rotierenden Elements, wie einer Wasserzählerturbine
Device for detecting the movement of a rotating element, such as the turbine in a water meter

(30) Priorité: 31.12.2003 FR 0351240
(43) Date de publication de la demande: 06.07.2005
(73) Titulaire: Itron France, 92130 Issy-Les-Moulineaux (FR)
(72) Inventeur: MICHAUD, Eric, 69840, CHENAS (FR); DURY, Hervé, 71000, MACON (FR); BULTEAU, Serge, 69840, JULIENAS (FR)
(74) Mandataire: Feray, Valérie

(56) Documents cités:
- EP-A- 0 467 753
- DE-A- 4 137 695

## Description

L'invention concerne un dispositif de détection de rotation d'un élément tournant tel que la turbine d'un compteur d'eau.

La plupart des compteurs d'eau comprennent un totalisateur à entraînement mécanique, c'est à dire que la rotation de la turbine entraîne, par l'intermédiaire d'une transmission mécanique et/ou magnétique, les rouleaux de l'index du compteur.

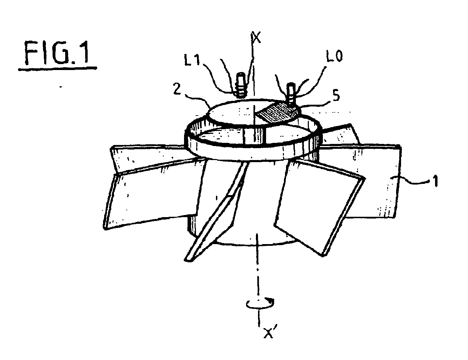

Il est également connu de détecter la rotation de la turbine à l'aide d'un détecteur de proximité placé en regard d'un élément tournant solidaire de la turbine et destiné à détecter le passage d'une marque placée de manière excentrée sur l'élément tournant. Le détecteur de proximité peut par exemple être basé sur une méthode inductive, auquel cas la marque sera constituée par un matériau dont les caractéristiques magnétiques et/ou électriques différent du reste de l'élément tournant. La figure 1 illustre un tel mode de détection. L'ensemble tournant est constitué par une turbine 1 d'un débitmètre non représenté et par un disque 2 solidaire de la turbine 1. Lors de l'écoulement d'un fluide tel que l'eau, la turbine 1 et le disque 2 sont animés d'un mouvement de rotation autour de l'axe XX'. La vitesse de rotation de l'élément tournant est directement reliée au débit instantané du fluide. Deux détecteurs de proximité L0 et L1 situés dans un plan P perpendiculaire à l'axe XX', selon deux directions radiales par rapport à l'axe XX' sont sensibles à la proximité d'une marque 5 qui est solidaire du disque 2 et excentrée par rapport à l'axe de rotation XX'. Il s'ensuit que lorsque l'élément tournant est animé d'un mouvement de rotation, la réponse des détecteurs de proximité L0 et L1 va évoluer en fonction de la position de la marque 5. A titre illustratif, les deux détecteurs de proximité L0 et L1 sont par exemple des bobines magnétiques couplés en parallèle avec des condensateurs formant ainsi deux circuits oscillants disposés selon deux directions radiales opposées. Le disque 2 est en matière non-métallique telle que du plastique moulé et la marque 5 est un secteur radial métallisé du disque.

Le document DE 41 37 695 A1 décrit un dispositif comprenant deux détecteurs adjacents à un rotor. Le rotor comprend deux secteurs ayant des propriétés magnétiques différentes. La réponse de chaque détecteur à une excitation, en particulier le temps d'amortissement, permet de déterminer quel secteur se trouve à proximité du détecteur. Le temps d'amortissement est mesuré en nombre d'oscillations dépassant un seuil.

Un tel système de détection pose cependant certaines difficultés ; en effet, il existe une série de paramètres qui varie en fonction du temps. Par exemple, pour un compteur d'eau intégré dans un calorimètre, il s'agit de la température de l'eau qui peut faire varier les caractéristiques du détecteur, de la tension d'alimentation du circuit de détection, notamment lorsque l'alimentation se fait par l'intermédiaire d'une pile, et de la distance variable entre le détecteur de proximité et l'élément tournant due au soulèvement de la turbine à grande vitesse. Il existe également une série de paramètres qui varient d'un détecteur à l'autre et qui sont difficiles et coûteux à maîtriser dans une production en grande série; par exemple, pour un détecteur du type inductif, il s'agit notamment des valeurs de la bobine et de son coefficient de qualité, ce qui conduit à un étalonnage de chaque détecteur ou à un tri.

Une solution connue aux problèmes mentionnés ci-dessus est décrite dans le document EP0467753. Le dispositif de détection de rotation décrit dans ce document comprend au moins deux détecteurs de proximité destinés à détecter le passage d'une marque solidaire de l'élément tournant. Le dispositif effectue une analyse de l'évolution du signal délivré par un premier détecteur. Dès que la marque a été détectée au niveau du détecteur, on incrémente l'index du nombre de tours et on sélectionne le second détecteur, excluant de ce fait le premier détecteur qui vient de détecter la marque ; les paramètres destinés à étudier l'évolution des signaux du deuxième détecteur sont alors réinitialisés et on obtient ainsi un système adaptatif permettant de s'affranchir des problèmes liés à la variation des paramètres.

La mise en oeuvre d'une telle solution pose cependant certaines difficultés.

En effet, le dispositif de cette solution utilise un circuit électronique complexe entraînant dès lors non seulement un temps de traitement relativement long mais également une consommation énergétique élevée.

La présente invention a pour objet un dispositif pour détecter la rotation d'un élément tournant autour d'un axe XX' selon la revendication 1.

Grâce à l'invention, la réinitialisation des paramètres servant à identifier le passage d'une marque au niveau des détecteurs est basé sur une recherche de ces paramètres par approximations successives à partir d'une information binaire de détection, c'est à dire une valeur de comparaison par rapport à une valeur seuil. Le dispositif de l'invention fournit un système simplifié basé sur l'interprétation d'une information binaire et non sur la mesure directe des paramètres. Cette technique de logique binaire par approximations successives permet un gain de temps et est davantage adaptée à un environnement à faible consommation, les circuits logiques utilisés étant relativement simples et peu consommateurs d'énergie.

Avantageusement, ledit élément tournant est en matière non métallique et ladite marque est formée par une partie métallisée dudit élément tournant.

Avantageusement, chaque détecteur de proximité est un circuit oscillant et ledit circuit d'excitation comprend un générateur d'impulsion alimentant successivement chaque détecteur de sorte que la réponse d'excitation de chacun des détecteurs est un signal oscillant plus ou moins amorti selon que la marque est ou non au ni veau dudit détecteur, ledit signal présentant une succession de lobes positifs et négatifs d'amplitude décroissante, chaque lobe pouvant successivement être numéroté.

De manière avantageuse, la durée de ladite fenêtre d'observation correspond sensiblement à la durée d'un lobe déterminé de ladite réponse d'excitation.

Avantageusement, la fréquence dudit générateur d'impulsion se situe entre 50 et 500 Hz et la réponse d'excitation de chacun des détecteurs a une fréquence environ égale à 250 kHz.

Selon un premier mode de réalisation particulièrement avantageux, lesdits moyens de comparaison sont adaptés pour recevoir une valeur seuil de comparaison variable de sorte que l'amplitude de la réponse d'excitation de chacun des détecteurs peut être comparée avec ladite valeur seuil de comparaison variable, lesdits moyens de réinitialisation comportant :
- des moyens de détermination par itérations successives, sur une fenêtre d'observation prédéterminée, de l'amplitude de la réponse d'excitation d'un détecteur lorsque ladite marque ne peut pas être au niveau dudit détecteur, en utilisant le passage d'un état logique à l'autre dudit niveau logique issu de la comparaison de ladite amplitude de la réponse d'excitation avec ladite valeur seuil de comparaison variable,
- des moyens pour fixer ladite valeur seuil de comparaison à une valeur dépendant de ladite amplitude de la réponse d'excitation déterminée par lesdits moyens de détermination.

Avantageusement, ladite fenêtre d'observation peut varier selon le lobe choisi de sorte que lesdits moyens de comparaison sont adaptés pour effectuer une comparaison sur une fenêtre d'observation qui se décale temporellement en fonction du numéro de lobe choisi.

Selon un deuxième mode de réalisation particulièrement avantageux, lesdits moye ns de réinitialisation comporte:
- des moyens de détermination par itérations successives, pour une valeur seuil de comparaison fixée, du numéro de lobe de la réponse d'excitation d'un détecteur lorsque ladite marque ne peut pas être au niveau dudit détecteur, en utilisant le passage d'un état logique à l'autre dudit niveau logique issu de la comparaison de ladite amplitude de la réponse d'excitation avec ladite valeur seuil de comparaison fixée lorsque le numéro de lobe varie,
- des moyens pour calibrer ladite fenêtre d'observation à une valeur dépendant dudit numéro de lobe déterminé par lesdits moyens de détermination.

Avantageusement, ledit élément tournant comprend un disque solidaire de la turbine d'un compteur d'eau, ledit compteur d'eau pouvant être intégré dans un calorimètre destiné à comptabiliser l'énergie délivrée par un circuit d'eau chaude.

Avantageusement, ladite valeur seuil de comparaison est une valeur de tension.

Avantageusement, le dispositif selon l'invention comporte :
- au moins trois détecteurs de proximité,
- des moyens pour déterminer le sens de rotation dudit élément tournant.

Avantageusement, lesdits moyens de réinitialisation fonctionnent en l'absence de rotation dudit élément tournant.

D'autres caractéristiques et avantages de la présente invention apparaîtront dans la description suivante de deux modes de réalisation de l'invention donnés à titre illustratif et nullement limitatif.

Dans les figures suivantes :
- La figure 1 représente un système de détection selon l'état de la technique,
- La figure 2 représente un dispositif de détection selon un premier mode de réalisation de l'invention,
- Les figures 3 à 5 représentent des signaux obtenus avec un détecteur de proximité utilisé dans le dispositif de détection de la figure 2,
- La figure 6 représente un dispositif de détection selon un deuxième mode de réalisation de l'invention,
- Les figures 7 à 9 représentent des signaux obtenus avec un détecteur de proximité utilisé dans le dispositif de détection de la figure 6,
- Les figures 10 et 11 représentent trois détecteurs utilisés dans un des dispositifs représentés sur l'une des figures 2 ou 6.

La figure 1 a déjà été décrite en relation avec l'état de la technique.

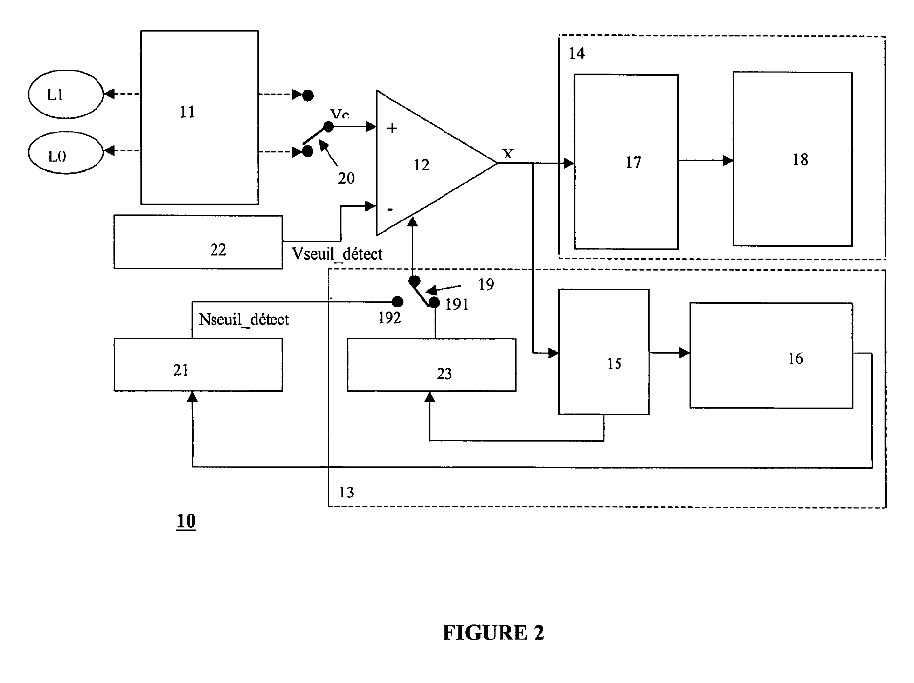

La figure 2 représente un dispositif 10 pour détecter la rotation d'un élément tournant selon un premier mode de réalisation de l'invention. Le dispositif 10 peut par exemple être utilisé avec le système de détection de la figure 1 et permet de détecter la rotation du disque 2 solidaire de la turbine 1. Comme pour la figure 1, nous ferons l'hypothèse ici que le disque est muni d'une marque excentrée par rapport à l'axe XX' et susceptible de modifier la réponse en amplitude des détecteurs de proximité lorsque le disque est animé d'un mouvement de rotation.

Le dispositif 10 comporte :
- deux détecteurs de proximité L1 et L0 semblables aux détecteurs de la figure 1,
- un circuit d'excitation 11,
- un premier commutateur 20,
- un comparateur 12,
- des moyens 14 pour identifier le passage de la marque au niveau des détecteurs L1 ou L0,
- des moyens de réinitialisation 13.

Le circuit d'excitation 11 permet d'exciter les deux détecteurs L0 et L1 en même temps et de fournir en sortie une tension Vc correspondant à la réponse d'excitation de l'un des détecteurs L0 ou L1.

Le commutateur 20 permet de fournir sur l'entrée positive du comparateur 12 la réponse d'excitation de l'un des deux détecteurs L0 ou L1.

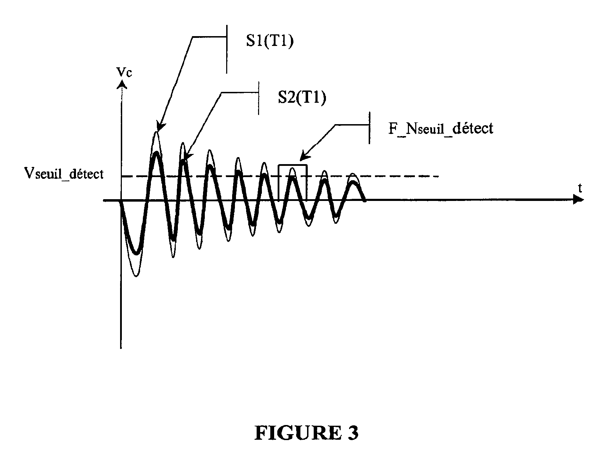

En fonctionnement normal, cette tension Vc est comparée avec une tension de référence Vseuil_détect fournie par un générateur 22. Cette tension de référence Vseuil_détect fixée est injectée sur l'entrée négative du comparateur 12. La figure 3 illustre ce mode de fonctionnement en présentant deux réponses d'excitation S1 (T1) et S2(T1 ) en fonction du temps. Ces deux excitations sont obtenues à une première température T1.

La réponse S1 (T1) est un signal faiblement amorti indiquant que la marque n'est pas sous le détecteur analysé.

Notons que ce signal S1 (T1) (tout comme le signal S2(T1)) est un signal oscillant comportant donc une pluralité de lobes positifs et négatifs ; par la suite, nous numéroterons les lobes positifs de un en un.

La comparaison de S1 (T1) avec Vseuil_détect est réalisée sur le lobe numéroté Nseuil_détect qui définit une fenêtre d'observation F _Nseuil_détect correspondant à la durée du lobe Nseuil_détect. Dans le cas de la figure 3, nous avons pris Nseuil_détect égal à 6. Ce numéro de lobe définissant la fenêtre d'observation est fixé par les moyens de commande 21 de la fenêtre d'observation. Un deuxième commutateur 19 intégré dans les moyens de réinitialisation 13 et se trouvant sur une première position 192 permet de commander la comparaison sur la fenêtre F_Nseuil_détect. Notons que cette commande par les moyens de commande 21 correspond à l'alimentation du comparateur 12 pendant la durée de la fenêtre F_ Nseuil_détect.

Sur cette fenêtre F_Nseuil_détect, l'amplitude du signal S1 (T1 ) reste supérieure à Vseuil_détect. Dès lors, le comparateur 12 donne sur sa sortie un niveau logique X égal à 1 indiquant que la marque n'est pas sous le détecteur analysée.

Sur cette même fenêtre, l'amplitude du signal S2(T1) passe sous la tension Vseuil_détect. Dès lors, le comparateur 12 donne sur sa sortie un niveau logique X égal à 0 indiquant que la marque est sous le détecteur analysée. Ainsi, les moyens 14 pour identifier le passage de la marque au niveau des détecteurs vont mémoriser cet état 0 dans un dispositif de mémorisation 17 et comptabiliser un demi-tour dans un dispositif de comptage 18. (1/m tour dans le cas de m détecteurs avec m supérieur ou égal à deux).

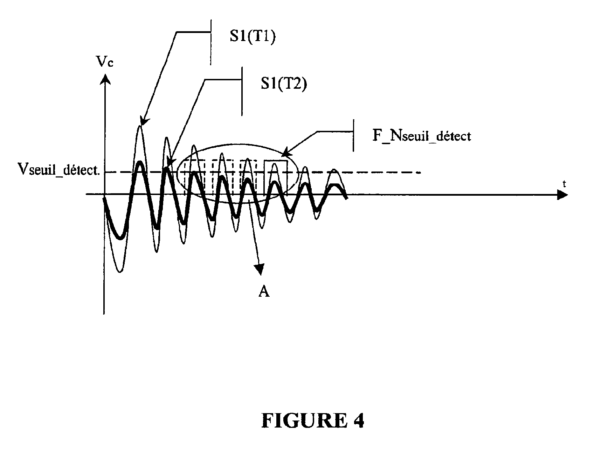

Il faut toutefois noter que la température peut évoluer ; ainsi, même en l'absence de la marque au niveau d'un des détecteurs, on peut avoir la configuration illustrée en figure 4 qui montre deux réponses d'excitation S1(T1) et S1(T2) en fonction du temps. Ces deux excitations sont respectivement obtenues à la première température T1 et à une deuxième température T2 plus élevée que T1. Dans les deux cas, la marque ne se trouve pas sous le détecteur analysé.

On remarque que le signal S1(T2) se trouve systématiquement en dessous du signal S1(T1) ; en effectuant une comparaison sur la fenêtre d'observation F_Nseuil_détect précédemment définie, l'amplitude du signal S1(T2) est déjà sous le seuil Vseuil_détect alors que l'on sait que la marque n'est pas sous le détecteur. Dès lors, il est important de pouvoir réinitialiser F_Nseuil_détect de façon à obtenir un résultat cohérent. Pour cela, le deuxième commutateur 19 est commuté sur sa deuxième position 191.

Les moyens de réinitialisation 13 comportent :
- le deuxième commutateur 19 déjà défini,
- des moyens de commande 23 permettant d'injecter une fenêtre d'observation variable sur le comparateur 12,
- un dispositif de recherche de fenêtre d'observation 15,
- un dispositif de calcul de F_Nseuil_détect 16.

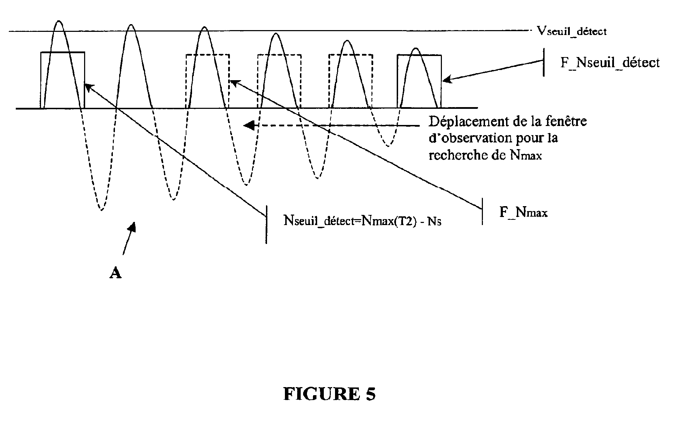

Le principe de fonctionnement de ces moyens de réinitialisation 13 sera mieux compris au regard de la figure 5 représentant un agrandissement A de la figure 4. Par soucis de clarté, seul le signal S1(T2) est représenté.

Rappelons que, dans cette configuration, nous savons que la marque ne se trouve pas sous le détecteur de proximité analysé, par exemple L0 ; cette information est obtenue par le fait que l'excitation précédente a montré que la marque se trouvait sous le détecteur L1 (obtention d'un niveau X égal à 0) ; dès lors, lors de l'excitation suivante, on est sûr que la marque ne se trouve pas encore sous le détecteur L0 (le temps de commutation du commutateur 20 étant choisi largement supérieure au temps que met la marque pour passer du détecteur L1 au détecteur L0).

Le deuxième commutateur 19 étant commuté sur sa deuxième position 191, les moyens de commande 23 permettent de décaler la fenêtre d'observation vers la gauche suivant la flèche en pointillés (en décrémentant de un en un le numéro de lobe) jusqu'à obtenir une fenêtre F_Nmax (correspondant au lobe placé à la position Nmax) pour laquelle l'amplitude du signal S1(T2) repasse au-dessus de la tension Vseuil_détect. Cette fenêtre F_Nmax est déterminée par dispositif de recherche de fenêtre d'observation 15 informé par le passage de X de 0 à 1.

Une fois la fenêtre F_Nmax, et donc le numéro de lobe Nmax correspondant, déterminés, le dispositif de calcul de 16 utilise ces valeurs pour calculer un numéro de lobe Nseuil_détect réinitialisé et défini par la relation :
Nseuil_détect = Nmax - Ns, où Ns est un entier fixe connu et propre à chaque détecteur de proximité. Il est également possible de prendre une valeur de Ns commune à chacun des détecteurs.

Cette nouvelle valeur de Nseuil_détect définit une nouvelle fenêtre d'observation F_Nseuil_détect pour laquelle on est certain que le dispositif 10 ne détectera pas la présence de la marque lorsque celle ci n'est pas sous le détecteur à analyser.

Ainsi, le dispositif de calcul de 16 transmet cette nouvelle valeur de F_Nseuil_détect aux moyens de commande 21 qui utiliseront cette nouvelle valeur lors des détections suivantes.

Le principe de réinitialisation sera le même si l'amplitude du signal du détecteur analysé augmente (cas d'une diminution de température) ; dans ce cas, il faudra rechercher le nouveau lobe positif maximum pour que l'amplitude du signal soit au-dessus de la tension de comparaison Vseuil_détect fixe.

Notons que l'ensemble des moyens compris dans les moyens de réinitialisation 13 peuvent par exemple être réalisés à l'aide de moyens logiciels via la programmation d'un microprocesseur.

Notons d'autre part, que, grâce à l'invention, on utilise avantageusement la valeur du niveau logique X pour à la fois comptabiliser le nombre de tours et réinitialiser le dispositif en cas de variation de certains paramètres telles que la température. La réinitialisation est ici réalisée en faisant varier la fenêtre d'observation et en gardant une tension de comparaison Vseuil_détect fixe. Nous allons voir dans la description d'un deuxième mode de réalisation qu'il est possible d'obtenir une réinitialisation en faisant varier la tension de comparaison Vseuil_détect et en gardant une fenêtre d'observation fixe.

La calibration des détecteurs peut-être faite soit à chaque 1/m de tour dans le cas de m détecteurs, c'est-à-dire à chaque détection de la marque mais elle peut également être effectuée à un temps plus relaxé en fonction de la variation des paramètres d'influences, ces derniers pouvant varier relativement lentement.

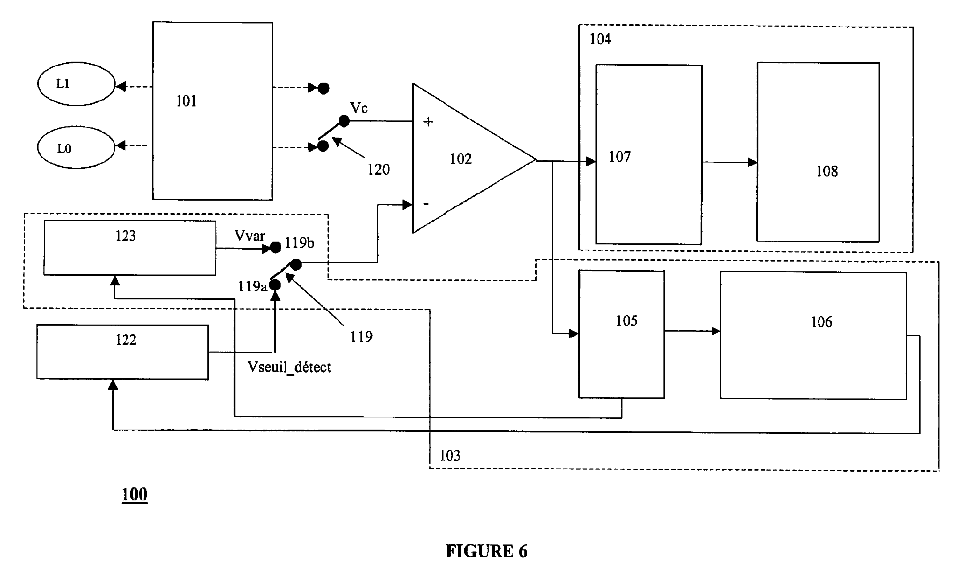

La figure 6 représente un dispositif 100 pour détecter la rotation d'un élément tournant selon un deuxième mode de réalisation de l'invention. Le dispositif 100 peut par exemple être utilisé avec le système de détection de la figure 1 et permet de détecter la rotation du disque 2 solidaire de la turbine 1. Comme pour la figure 1, nous ferons l'hypothèse ici que le disque est muni d'une marque excentrée par rapport à l'axe XX' et susceptible de modifier la réponse en amplitude des détecteurs de proximité lorsque le disque est animé d'un mouvement de rotation.

Le dispositif 100 comporte :
- deux détecteurs de proximité L1 et L0 semblables aux détecteurs de la figure 1,
- un circuit d'excitation 101,
- un premier commutateur 120,
- un comparateur 102,
- des moyens 104 pour identifier le passage de la marque au niveau des détecteurs L1 ou L0,
- des moyens de réinitialisation 103.

Le circuit d'excitation 101 permet d'exciter les deux détecteurs L0 et L1 en même temps et de fournir en sortie une tension Vc correspondant à la réponse d'excitation de l'un des détecteurs L0 ou L1.

Le commutateur 120 permet de fournir sur l'entrée positive du comparateur 102 la réponse d'excitation de l'un des deux détecteurs L0 ou L1.

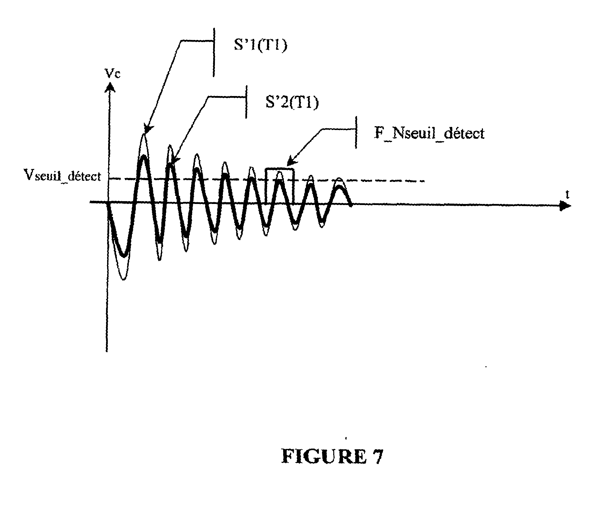

En fonctionnement normal, cette tension Vc est comparée avec une tension de référence Vseuil_détect fournie par un générateur 122. Cette tension de référence Vseuil_détect est injectée sur l'entrée négative du comparateur 102. La figure 7 illustre ce mode de fonctionnement en présentant deux réponses d'excitation S'1 (T1) et S'2(T1) en fonction du temps. Ces deux excitations sont obtenues à une première température T1.

La réponse S'1 (T1) est un signal faiblement amorti indiquant que la marque n'est pas sous le détecteur analysé.

Notons que ce signal S'1 (T1) (tout comme le signal S'2(T1)) est un signal oscillant comportant donc une pluralité de lobes positifs et négatifs ; par la suite, nous numéroterons les lobes positifs de un en un.

La comparaison de S'1 (T1 ) avec Vseuil_détect est réalisée sur le lobe numéroté Nseuil_détect qui définit une fenêtre d'observation F_Nseuil_détect correspondant à la durée du lobe Nseuil_détect. Dans le cas de la figure 3, nous avons pris Nseuil_détect égal à 6. Ce numéro de lobe définissant la fenêtre d'observation est fixe. Notons que cette fenêtre F_Nseuil_détect correspond à la durée d'alimentation du comparateur 102 et du générateur 122. Ainsi, le générateur 122 est alimenté uniquement pendant la fenêtre F_Nseuil_détect, ce qui permet de réduire la consommation.

Sur cette fenêtre F_Nseuil_détect, l'amplitude du signal S'1 (T1) reste supérieure à Vseuil_détect. Dès lors, le comparateur 102 donne sur sa sortie un niveau logique X égal à 1 indiquant que la marque n'est pas sous le détecteur analysée.

Sur cette même fenêtre, l'amplitude du signal S'2(T1) passe sous la tension Vseuil_détect. Dès lors, le comparateur 102 donne sur sa sortie un niveau logique X égal à 0 indiquant que la marque est sous le détecteur analysée. Ainsi, les moyens 104 pour identifier le passage de la marque au niveau des détecteurs vont mémoriser cet état 0 dans un dispositif de mémorisation 107 et comptabiliser un demi-tour dans un dispositif de comptage 108. (1 /m tour dans le cas de m détecteurs avec m supérieur ou égal à deux).

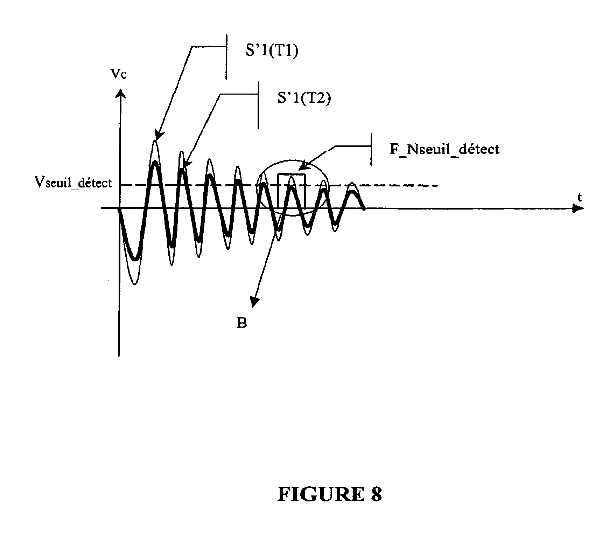

Il faut toutefois noter que la température peut évoluer ; ainsi, même en l'absence de la marque au niveau d'un des détecteurs, on peut avoir la configuration illustrée en figure 8 qui montre deux réponses d'excitation S'1(T1) et S'1 (T2) en fonction du temps. Ces deux excitations sont respectivement obtenues à la première température T1 et à une deuxième température T2 plus élevée que T1. Dans les deux cas, la marque ne se trouve pas sous le détecteur analysé.

On remarque que le signal S'1(T2) se trouve systématiquement en dessous du signal S'1(T1) ; en effectuant une comparaison sur la fenêtre d'observation F_Nseuil_détect précédemment définie, l'amplitude du signal S'1 (T2) est déjà sous le seuil Vseuil_détect alors que l'on sait que la marque n'est pas sous le détecteur. Dès lors, il est important de pouvoir réinitialiser Vseuil_détect de façon à obtenir un résultat cohérent. Pour cela, on utilise les moyens de réinitialisation 103 qui comportent :
- un deuxième commutateur 119,
- des moyens 123 permettant d'injecter une tension variable Vvar sur l'entrée négative du comparateur 102,
- un dispositif de recherche de tension 105,
- un dispositif de calcul de Vseuil_détect 106.

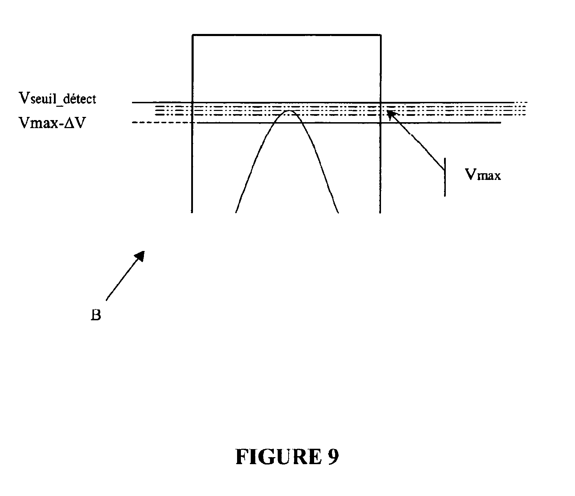

Le principe de fonctionnement de ces moyens de réinitialisation 103 sera mieux compris au regard de la figure 9 représentant un agrandissement B de la figure 84. Par soucis de clarté, seul le signal S'1(T2) est représenté.

Rappelons que, dans cette configuration, nous savons que la marque ne se trouve pas sous le détecteur de proximité analysé, par exemple L0 ; cette information est obtenue par le fait que l'excitation précédente a montré que la marque se trouvait sous le détecteur L1 (obtention d'un niveau X égal à 0) ; dès lors, lors de l'excitation suivante, on est sûr que la marque ne se trouve pas encore sous le détecteur L0 (le temps de commutation du commutateur 120 étant choisi largement supérieure au temps que met la marque pour passer du détecteur L1 au détecteur L0). Ainsi, dès que la bobine L1 est détectée, on calibre la bobine L0 car on est sûr que L0 n'est pas sous la marque pendant un laps de temps dépendant de la vitesse de rotation de la cible et de la forme de celle-ci.

Le deuxième commutateur 119 comporte deux positions 119a et 119b. La position de fonctionnement normal (hors réinitialisation) est la position 119a pour laquelle l'entrée négative du comparateur 102 est reliée à Vseuil_détect fournie par le générateur 122.

Lors de la réinitialisation, le commutateur 119 est commutée sur sa deuxième position 119b de sorte que les moyens 123 permettent d'injecter une tension variable Vvar sur l'entrée négative du comparateur 102 et donc de faire décroître la tension Vseuil_détect initialement sur l'entrée négative jusqu'à une tension Vmax pour laquelle l'amplitude du signal S'1(T2) repasse au-dessus de la tension Vmax. Cette tension Vmax est déterminée par le dispositif de recherche de tension 105 informé par le passage de X de 0 à 1. Ainsi, on décrémente Vvar jusqu'obtenir un 1 logique.

Une fois la tension Vmax déterminée, le dispositif de calcul de Vseuil_détect 106 utilise cette valeur pour calculer une tension Vseuil_détect réinitialisée et défini par la relation :
Vseuil_détect = Vmax - ΔV, où ΔV est une valeur connue et propre à chaque détecteur de proximité. Il est également possible de prendre une valeur de ΔV commune à chacun des détecteurs.

Ainsi, le dispositif de calcul de 106 transmet cette nouvelle valeur de Vseuil_détect au générateur 122 qui utilisera cette nouvelle valeur lors des détections suivantes.

On est certain que, pour cette nouvelle valeur de Vseuil_détect, le dispositif 100 ne détectera pas la présence de la marque lorsque celle ci n'est pas sous le détecteur à analyser.

Le principe est le même, si l'amplitude du signal du détecteur augmente (diminution de la température), c'est-à-dire qu'il faut augmenter le signal jusqu'à ce que le dispositif donne l'information binaire X=0.

Notons que la fenêtre F_Nseuil_détect correspond également à la durée d'alimentation des moyens 123. Une telle alimentation permet de réduire la consommation.

Dans les deux modes de réalisation décrits aux figures 2 et 6, la réinitialisation se fait par approximation successive en faisant varier la valeur d'un paramètre et en interprétant l'information binaire du niveau logique X.

La réinitialisation exposée ci-dessus n'a été envisagée que lorsque la marque est en mouvement ; toutefois, il est également possible d'effectuer cette réinitialisation lorsque la marque est immobile. Pour cela, on recherche la tension Vmax suivant le procédé décrit plus haut et on compare cette valeur par rapport à la tension Vmax précédente. Si la nouvelle valeur de Vmax est supérieure au Vmax précédent, il faut alors prendre en compte cette nouvelle valeur de Vmax. En effet, si l'amplitude des détecteurs a augmenté, même si le détecteur est en regard de la marque, on peut prendre en compte la nouvelle valeur de Vmax si elle est supérieure à la valeur précédente, ce qui permettra au système de ne pas perdre de tour quand la marque recommencera à tourner en présence d'un débit de fluide.

Bien entendu, la présente invention n'est pas limitée aux modes de réalisations qui viennent d'être décrits.

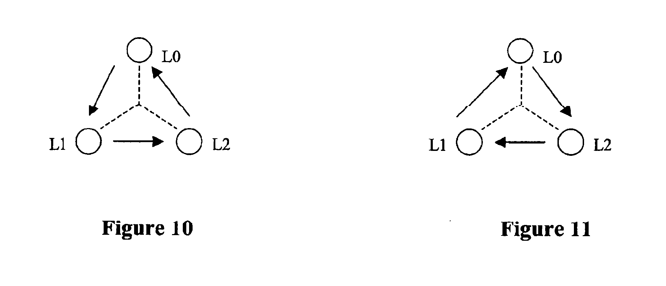

Notamment, nous avons décrit l'invention dans le cas de deux détecteurs de proximité ; il est clair que l'invention s'applique également en présence d'un nombre m plus élevé de détecteurs. Au moins trois détecteurs L0, L1 et L2 peuvent ainsi s'avérer nécessaire pour détecter le sens de rotation du disque. Les figures 10 et 11 illustrent une manière de détecter le sens de rotation représenté par des flèches, ce sens pouvant être soit positif tel que représenté en figure 10 soit négatif tel que représenté en figure 11. Le sens peut alors être déterminé selon l'algorithme suivant :
a) Après que L0 ( c'est à dire Ln avec n=0) ait été détecté (c'est à dire que la marque se trouve sous L0), si le détecteur suivant détecté est L1 (c'est-à-dire Ln+1) alors la marque tourne dans le sens de rotation positif (figure 10).
b) Après que L2 ait été détecté, si le détecteur suivant détecté est L1, alors la marque tourne dans le sens de rotation négatif (figure 11).

De même, les moyens de calculs ont été décrits comme des moyens logiciels programmés sur un microprocesseur mais ils peuvent également être réalisés à l'aide de moyens matériels.

Notons également que nous avons considéré la température comme paramètre faisant varier les caractéristiques des détecteurs. Toutefois, d'autres paramètres (humidité, vieillissement, tension d'alimentation,...) peuvent également être pris en compte. La calibration permet ainsi de suivre les variations du coefficient de qualité des détecteurs.

## Revendications

1. Dispositif (10, 100) pour détecter la rotation d'un élément tournant autour d'un axe XX' comprenant :
- m détecteurs (L0, L1) de proximité situés dans un plan perpendiculaire à l'axe XX' selon m directions radiales, m étant un entier supérieur ou égal à 2, une marque étant solidaire dudit élément tournant et excentrée par rapport à l'axe XX' et étant susceptible de modifier la réponse en amplitude desdits détecteurs de proximité lorsque ledit élément tournant est animé d'un mouvement de rotation,
- un circuit d'excitation (11, 101) destiné à exciter lesdits détecteurs de proximité, chacun desdits détecteurs fournissant une réponse d'excitation lorsqu'il est excité,
ledit dispositif (10, 100) étant **caractérisé en ce qu'**il comporte :
- des moyens de comparaison (12, 102) de l'amplitude de la réponse d'excitation de chacun des détecteurs (L0, L1) avec une valeur seuil de comparaison, pendant une période temporelle, dite fenêtre d'observation, et pour fournir un niveau logique 1 ou 0 selon que l'amplitude de réponse est supérieure ou inférieure à ladite valeur seuil de comparaison,
- des moyens (14, 104) pour identifier le passage de ladite marque au niveau d'un desdits détecteurs (L0, L1) en fonction de la valeur 0 ou 1 dudit niveau logique,
- des moyens de réinitialisation (13, 103) pour faire varier soit ladite valeur seuil de comparaison, soit ladite fenêtre d'observation, caractéristiques d'un détecteur (L0, L1) dès lors que les moyens de comparaison (12, 102) fournissent un niveau logique représentatif du passage de ladite marque au niveau dudit détecteur alors que ladite marque ne peut pas être au niveau dudit détecteur (L0, L1), ladite réinitialisation consistant à rechercher par itérations successives, soit une nouvelle valeur seuil de comparaison, soit une nouvelle fenêtre d'observation, pour laquelle les moyens de comparaison (12, 102) fournissent un niveau logique représentatif de l'absence de passage de ladite marque au niveau dudit détecteur.

2. Dispositif (10, 100) selon la revendication 1 **caractérisé en ce que** ledit élément tournant est en matière non métallique et ladite marque est formée par une partie métallisée dudit élément tournant.

3. Dispositif (10, 100) selon la revendication 1 ou 2 **caractérisé en ce que** chaque détecteur de proximité est un circuit oscillant et ledit circuit d'excitation comprend un générateur d'impulsion alimentant successivement chaque détecteur de sorte que la réponse d'excitation de chacun des détecteurs est un signal oscillant plus ou moins amorti selon que la marque est ou non au niveau dudit détecteur, ledit signal présentant une succession de lobes positifs et négatifs d'amplitude décroissante, chaque lobe pouvant successivement être numéroté.

4. Dispositif (10, 100) selon la revendication 3 **caractérisé en ce que** la durée de ladite fenêtre d'observation correspond sensiblement à la durée d'un lobe déterminé de ladite réponse d'excitation.

5. Dispositif (10, 100) selon l'une des revendications 3 ou 4 **caractérisé en ce que** la fréquence dudit générateur d'impulsion se situe entre 50 et 500 Hz.

6. Dispositif (10, 100) selon l'une des revendications 3 à 5 **caractérisé en ce que** la réponse d'excitation de chacun des détecteurs a une fréquence environ égale à 250 kHz.

7. Dispositif (100) selon l'une des revendications 1 à 6 **caractérisé en ce que** lesdits moyens de comparaison (102) sont adaptés pour recevoir une valeur seuil de comparaison variable (Vvar) de sorte que l'amplitude de la réponse d'excitation de chacun des détecteurs (L0, L1) peut être comparée avec ladite valeur seuil de comparaison variable (Vvar), lesdits moyens de réinitialisation (103) comportant :
- des moyens de détermination (105) par itérations successives, sur une fenêtre d'observation prédéterminée, de l'amplitude de la réponse d'excitation d'un détecteur lorsque ladite marque ne peut pas être au niveau dudit détecteur, en utilisant le passage d'un état logique à l'autre dudit niveau logique issu de la comparaison de ladite amplitude de la réponse d'excitation avec ladite valeur seuil de comparaison variable,
- des moyens (106) pour calibrer ladite valeur seuil de comparaison à une valeur dépendant de ladite amplitude de la réponse d'excitation déterminée par lesdits moyens de détermination (105).

8. Dispositif (10) selon l'une des revendications 4 à 6 **caractérisé en ce que** ladite fenêtre d'observation peut varier selon le lobe choisi de sorte que lesdits moyens de comparaison (12) sont adaptés pour effectuer une comparaison sur une fenêtre d'observation qui se décale temporellement en fonction du numéro de lobe choisi.

9. Dispositif (10) selon la revendication 8 **caractérisé en ce que** lesdits moyens de réinitialisation comporte:
- des moyens de détermination (15) par itérations successives, pour une valeur seuil de comparaison fixée, du numéro de lobe de la réponse d'excitation d'un détecteur (L0, L1) lorsque ladite marque ne peut pas être au niveau dudit détecteur, en utilisant le passage d'un état logique à l'autre dudit niveau logique issu de la comparaison de ladite amplitude de la réponse d'excitation avec ladite valeur seuil de comparaison fixée lorsque le numéro de lobe varie,
- des moyens pour calibrer (16) ladite fenêtre d'observation à une valeur dépendant dudit numéro de lobe déterminé par lesdits moyens de détermination (15).

10. Dispositif (10, 100) selon l'une des revendications précédentes **caractérisé en ce que** ledit élément tournant comprend un disque solidaire de la turbine d'un compteur d'eau, ledit compteur d'eau pouvant être intégré dans un calorimètre destiné à comptabiliser l'énergie délivrée par un circuit d'eau chaude.

11. Dispositif (10, 100) selon l'une des revendications précédentes **caractérisé en ce que** ladite valeur seuil de comparaison est une valeur de tension.

12. Dispositif selon l'une des revendications précédentes **caractérisé en ce qu'**il comporte :
- au moins trois détecteurs (L0, L1, L2) de proximité,
- des moyens pour déterminer le sens de rotation dudit élément tournant.

13. Dispositif selon l'une des revendications précédentes **caractérisé en ce que** lesdits moyens de réinitialisation (13, 103) fonctionnent en l'absence de rotation dudit élément tournant.

## Claims

1. A device (10, 100) for detecting the rotation of a rotary element around an axis XX', comprising:
- m proximity detectors (L0, L1) situated in a plane perpendicular to the axis XX' in m radial directions, m being an integer greater than or equal to 2, a mark being secured to said rotary element and eccentric relative to the axis XX' and being able to modify the amplitude response of said proximity detectors when said rotary element is rotated,
- an excitation circuit (11, 101) intended to excite said proximity detectors, each of said detectors supplying an excitation response when it is excited,
said device (10, 100) being **characterized in that** it comprises:
- means (12, 102) for comparing the amplitude of the excitation response of each of the detectors (L0, L1) with a threshold comparison value, during a time period, called observation window, and to supply a logic level 1 or 0 depending on whether the response amplitude is above or below said comparison threshold vale,
- means (14, 104) for identifying the passage of said mark at one of said detectors (L0, L1) as a function of the value 0 or 1 of said logic level,
- reinitialization means (13, 103) to vary either said comparison threshold value, or said observation window, characteristic of a detector (L0, L1) inasmuch as the comparison means (12, 102) supply a logic level representative of the passage of said mark at said detector whereas said mark cannot be at the level of said detector (L0, L1), said reinitialization consisting of looking, through successive iterations, either for a new comparison threshold value, or a new observation window, for which the comparison means (12, 102) supply a logic level representative of the absence of passage of said mark at said detector.

2. The device (10, 100) according to claim 1, **characterized in that** said rotary element is made from a nonmetallic material and said mark is formed by a metallized part of said rotary element.

3. The device (10, 100) according to claim 1 or 2, **characterized in that** each proximity detector is an oscillating circuit and said excitation circuit comprises a pulse generator successively powering each detector so that the excitation response of each of the detectors is an oscillating signal that is more or less damped depending on whether the mark is at said detector, said signal having a series of positive and negative lobes of decreasing amplitude, each lobe successively being able to be numbered.

4. The device (10, 100) according to claim 3, **characterized in that** the duration of the said observation window substantially corresponds to the duration of a particular lobe of said excitation response.

5. The device (10, 100) according to one of claims 3 or 4, **characterized in that** the frequency of said pulse generator is situated between 50 and 500 Hz.

6. The device (10, 100) according to one of claims 3 to 5, **characterized in that** the excitation response of each of the detectors has a frequency approximately equal to 250 kHz.

7. The device (100) according to one of claims 1 to 6, **characterized in that** said comparison means (102) are adapted to receive a variable comparison threshold value (Vvar) so that the amplitude of the excitation response of each of the detectors (L0, L1) can be compared with said variable comparison threshold value (Vvar), said reinitialization means (103) comprising:
- means (105) for determination, through successive iterations, over a predetermined observation window, the amplitude of the excitation response of a detector when said mark cannot be at the level of said detector, using the transition from one logic state to the other logic level resulting from the comparison of said amplitude of the excitation response with said variable comparison threshold value,
- means (106) for calibrating said comparison threshold value to a value depending on said amplitude of the excitation response determined by said determination means (105).

8. The device (10) according to one of claims 4 to 6, **characterized in that** said observation window can vary depending on the chosen lobe so that said comparison means (12) are adapted to perform a comparison on the observation window that is time-shifted as a function of the chosen lobe number.

9. The device (10) according to claim 8, **characterized in that** said reinitialization means comprise:
- means (15) for determining, through successive iterations, for a fixed comparison threshold value, the lobe number of the excitation response of a detector (L0, L1) when said mark cannot be at the level of said detector, using the transition from one logic state to the other of said logic level resulting from the comparison of said amplitude of the excitation response with said fixed comparison threshold value when the lobe number varies,
- means (16) for calibrating said observation window to a value depending on said lobe number determined by said determination means (15).

10. The device (10, 100) according to one of the preceding claims, **characterized in that** said rotary element comprises a disk secured to the turbine of a water meter, said water meter being able to be incorporated into a calorimeter intended to count the energy delivered by a hot water circuit.

11. The device (10, 100) according to one of the preceding claims, **characterized in that** said comparison threshold value is a voltage value.

12. The device according to one of the preceding claims, **characterized in that** it comprises:
- at least three proximity detectors (L0, L1, L2),
- means for determining the direction of rotation of said rotary element.

13. The device according to one of the preceding claims, **characterized in that** said reinitialization means (13, 103) operate in the absence of rotation of said rotary element.

## Patentansprüche

1. Vorrichtung (10, 100) zur Detektion der Rotation eines Elements, das um eine Achse XX' rotiert, die umfasst:
- m Näherungsdetektoren (L0, L1), die sich in einer Ebene senkrecht zur Achse XX' gemäß m radialer Richtungen befinden, wobei m eine Ganzzahl größer oder gleich 2 ist, wobei eine Marke mit dem rotierenden Element verbunden ist und exzentriert im Verhältnis zur Achse XX' und imstande, die Amplitudenantwort der Näherungsdetektoren zu ändern, wenn sich das rotierende Element in einer Rotationsbewegung befindet,
- einen Erregerkreis (11, 101), der dazu bestimmt ist, die Näherungsdektoren zu erregen, wobei jeder Detektoren eine Erregungsantwort liefert, wenn er erregt ist, wobei die Vorrichtung (10, 100) **dadurch gekennzeichnet ist, dass** sie aufweist:
- Vergleichsmittel (12, 102) der Amplitude der Erregungsantwort jedes Detektors (L0, L1) mit einem Vergleichsgrenzwert während einer als Beobachtungsfenster genannten Zeitperiode und um ein logisches Niveau 1 oder 0 zu liefern, je nachdem, ob die Antwortamplitude größer oder kleiner als der Vergleichsgrenzwert ist,
- Mittel (14, 104), um den Übergang der Marke auf Ebene einer der Detektoren (L0, L1) in Abhängigkeit vom Wert 0 oder 1 des logischen Niveaus zu identifizieren,
- Reinitialisierungsmittel (13, 103), um entweder den Vergleichsgrenzwert oder das Beobachtungsfenster als Merkmale eines Detektors (L0, L1) zu ändern, sobald die Vergleichsmittel (12, 102) ein logisches Niveau liefern, das für den Übergang der Marke auf die Ebene des Detektors repräsentativ ist, während die Marke nicht auf Ebene des Detektors (L0, L1 sein kann, wobei die Reinitialisierung darin besteht, durch aufeinanderfolgende Iterationen entweder einen neuen Vergleichsgrenzwert oder ein neues Beobachtungsfenster zu suchen, wofür die Vergleichswerte (12, 102) ein logisches Niveau liefern, das für die Abwesenheit des Übergangs der Marke auf Ebene des Detektors repräsentativ ist.

2. Vorrichtung (10, 100) nach Anspruch 1, **dadurch gekennzeichnet, dass** das rotierende Element aus nichtmetallischem Werkstoff ist und die Marke von einem metallisierten Abschnitt des rotierenden Elements gebildet wird.

3. Vorrichtung (10, 100) nach Anspruch 1 oder 2, **dadurch gekennzeichnet, dass** jeder Näherungsdetektor ein Schwingkreis ist und der Erregerkreis einen Impulsgeber umfasst, der aufeinanderfolgend jeden Detektor derart versorgt, dass die Erregungsantwort jedes Detektors ein mehr oder weniger gedämpftes Schwingsignal ist, je nachdem, ob die Marke auf Ebene des Detektors ist oder nicht, wobei das Signal eine Abfolge von positiven und negativen Scheiteln einer abnehmenden Amplitude aufweist, wobei jeder Scheitel aufeinanderfolgend nummerierbar ist.

4. Vorrichtung (10, 100) nach Anspruch 3, **dadurch gekennzeichnet, dass** die Dauer des Beobachtungsfensters etwa der Dauer eines bestimmten Scheitels der Erregungsantwort entspricht.

5. Vorrichtung (10, 100) nach einem der Ansprüche 3 oder 4, **dadurch gekennzeichnet, dass** die Frequenz des Impulsgebers zwischen 50 und 500 Hz angesiedelt ist.

6. Vorrichtung (10, 100) nach einem der Ansprüche 3 bis 5, **dadurch gekennzeichnet, dass** die Erregungsantwort jedes Detektors eine Frequenz von zirka gleich 250 kHz hat.

7. Vorrichtung (100) nach einem der Ansprüche 1 bis 6, **dadurch gekennzeichnet, dass** die Vergleichsmittel (102) geeignet sind, um einen variablen Vergleichsgrenzwert (Vvar) zu empfangen, so dass die Amplitude der Erregungsantwort jedes Detektors (L0, L1) mit dem variablen Vergleichsgrenzwert (Vvar) vergleichbar ist, wobei die Reinitialisierungsmittel (103) aufweisen:
- Bestimmungsmittel (105) durch aufeinanderfolgende Iterationen, für ein vorbestimmtes Beobachtungsfenster, der Amplitude der Erregungsantwort eines Detektors, wenn die Marke nicht auf Ebene des Detektors sein kann, durch Nutzung des Übergangs von einem logischen Zustand in den anderen des logischen Niveaus, das aus dem Vergleich der Amplitude der Erregungsantwort mit dem variablen Vergleichsgrenzwert hervorgegangen ist,
- Mittel (106), um den Vergleichsgrenzwert auf einen Wert zu kalibrieren, der von der von den Bestimmungsmitteln (105) bestimmten Amplitude der Erregungsantwort abhängt.

8. Vorrichtung (10) nach einem der Ansprüche 4 bis 6, **dadurch gekennzeichnet, dass** das Beobachtungsfenster je nach ausgewähltem Scheitel änderbar ist, so dass die Vergleichsmittel (12) geeignet sind, um einen Vergleich für ein Beobachtungsfenster durchzuführen, das zeitlich in Abhängigkeit von der Nummer des ausgewählten Scheitels versetzt ist.

9. Vorrichtung (10) nach Anspruch 8, **dadurch gekennzeichnet, dass** die Reinititalisierungsmittel aufweisen:
- Bestimmungsmittel (15) durch aufeinanderfolgende Iterationen, für einen festgelegten Vergleichsgrenzwert, der Nummer des Scheitels der Erregungsantwort eines Detektors (L0, L1), wenn die Marke nicht auf Ebene des Detektors sein kann, durch Nutzung des Übergangs eines logischen Zustands in den anderen des logischen Niveaus, das aus dem Vergleich der Amplitude der Erregungsantwort mit dem festgelegten Vergleichsgrenzwert hervorgegangen ist, wenn sich die Scheitelnummer ändert,
- Mittel zum Kalibrieren (16) des Beobachtungsfensters auf einen Wert, der von der von den Bestimmungsmitteln (15) bestimmten Scheitelnummer abhängt.

10. Vorrichtung (10, 100) nach einem der vorangehenden Ansprüche, **dadurch gekennzeichnet, dass** das rotierende Element eine mit der Turbine eines Wasserzählers verbundene Scheibe umfasst, wobei der Wasserzähler in ein Kalorimeter integrierbar ist, das zur Abrechnung der von einem Warmwasserkreis gelieferten Energie bestimmt ist.

11. Vorrichtung (10, 100) nach einem der vorangehenden Ansprüche, **dadurch gekennzeichnet, dass** der Vergleichsgrenzwert ein Spannungswert ist.

12. Vorrichtung nach einem der vorangehenden Ansprüche, **dadurch gekennzeichnet, dass** sie aufweist:
- mindestens drei Näherungsdetektoren (L0, L1, L2),
- Mittel zur Bestimmung der Rotationsrichtung des rotierenden Elements.

13. Vorrichtung nach einem der vorangehenden Ansprüche, **dadurch gekennzeichnet, dass** die Reinitialisierungsmittel (13, 103) bei Abwesenheit einer Rotation des rotierenden Elements funktionieren.
